# EUROPEAN PATENT APPLICATION

(11) **EP 4 641 997 A1**
(43) Date of publication of application: **29.10.2025**
(21) Application number: 25171807.8
(22) Date of filing: 22.04.2025
(51) Int. Cl.: H04L 43/00, G08B 29/14

(54) **INPUT/OUTPUT MODULE AND SELF-TEST METHOD THEREOF**

(30) Priority: 22.04.2024 CN 202410486852
(71) Applicant: Gulf Security Technology Company Limited, Hebei (CN)
(72) Inventor: The designation of the inventor has not yet been filed
(74) Representative: Dehns

(57) **Abstract**

This application relates to the technical field of fire detection, and in particular, to an input/output module (1) and a self-test method for the input/output module (1). This application provides an input/output module (1) and a self-test method thereof, and an operator can directly perform a self-test after the input/output module (1) is installed, without relying on a fire control panel, making installation and testing operations convenient and efficient. The input/output module (1) includes a plurality of ports (2), a self-test mode activation unit (3), a port switching unit (4), and a plurality of port indicator lights (5). The plurality of ports (2) includes input ports (21) and output ports (22), the self-test mode activation unit (3) activates the input/output module (1) to enter a self-test mode, the port switching unit (4) switches and selects a port (2)-currently being tested in the self-test mode, and the plurality of port indicator lights (5) are disposed corresponding to the plurality of ports (2) respectively and display selected states and detection results of the corresponding ports (2).

## Description

### BACKGROUND

This invention relates to the technical field of fire detection, and in particular, to an input/output module and a self-test method for the input/output module.

In a fire alarm system, an input/output module can serve as a signal transmission hub to output a signal to control a connected controlled device when there is a control requirement, and can also receive a feedback signal of the device to report to a master control device. For example, an alarm controller may start, with the input/output module, an external control device that needs to be linked, such as a smoke prevention valve, an air supply valve, a fire shutter, a fan, or an alarm bell.

In order to ensure the stability and reliability of the fire alarm system, it is necessary to verify whether a connection of the input/output module is correct when the input/output module is put into use. In the prior art, an installer needs to connect an input/output module to a fire alarm linkage system, and then perform a checking operation through a connected fire control panel, resulting in low operating efficiency.

### SUMMARY

In view of the above problem, this application provides an input/output module and a self-test method thereof, and an operator can directly perform a self-test after the input/output module is installed, without relying on a fire control panel, making installation and testing operations convenient and efficient.

In one aspect, the invention provides an input/output module including a plurality of ports, a self-test mode activation unit, a port switching unit, and a plurality of port indicator lights. The plurality of ports includes input ports and output ports, the self-test mode activation unit activates the input/output module to enter a self-test mode, a port switching unit switches and selects a port currently being tested in the self-test mode, and a plurality of port indicator lights are disposed corresponding to the plurality of ports respectively and display selected states and detection results of the corresponding ports.

Optionally, each of the output ports in the input/output module is communicatively connected to a first external module.

Optionally, the input/output module further includes a bus port communicatively connected to a second external module.

Optionally, the input/output module further includes a mode indicator light disposed corresponding to the self-test mode activation unit and configured to display an operation mode of the input/output module.

Optionally, the self-test mode activation unit and the port switching unit are respectively configured as a first button switch and a second button switch.

In another aspect, the invention provides a self-test method for an input/output module, the self-test method being applied to the input/output module described above, the self-test method including: a mode selection step of controlling the input/output module to enter a self-test mode through the self-test mode activation unit; a port selection step of selecting a port to be tested through the port switching unit; and a port testing step of transmitting a test signal to the port to be tested through the self-test mode activation unit.

Optionally, in the mode selection step, the self-test mode is entered/exited by a long press of the first button switch.

Optionally, in the port selection step, when the second button switch is pressed to select a certain port, a port indicator light corresponding to the port lights up.

Optionally, the self-test method further includes: an input port testing step of adjusting a certain input port to a simulated active state and transmitting the simulated active state when the input/output module polls the input port; and a test result displaying step of determining a state of the input port according to the port indicator light and/or the second external module corresponding to the input port.

Optionally, the self-test method further includes: an output port testing step of transmitting an adjustment signal to the output port to switch an output state of the output port; and a test result displaying step of determining a state of the output port according to the port indicator light and/or the first external module corresponding to the output port.

In one or more embodiments of the invention, the self-test mode activation unit, the port switching unit and the plurality of port indicator lights are all installed on the input/output module itself. After the operator completes the connection and installation of the input/output module, the operator can directly operate through the self-test mode activation unit and the port switching unit to detect whether the ports can operate normally, and detection processes and results of the ports can be directly fed back to the operator through the corresponding port indicator lights. The input/output module can implement a self-test, and a self-test operation is convenient, intuitive, and low in cost, which can effectively improve detection efficiency and save time and labor costs.

### BRIEF DESCRIPTION OF THE DRAWINGS

Fig. 1 is a schematic diagram of an input/output module.
Fig. 2 is a schematic flowchart of a self-test method for the input/output module.

List of Reference Numerals: Input/output module 1, port 2, input port 21, output port 22, self-test mode activation unit 3, port switching unit 4, port indicator light 5, mode indicator light 6, bus port 7, and DIP switch 8.

### DETAILED DESCRIPTION

First, it should be noted that compositions, working principles, features, advantages, and the like of a communication circuit, a communication system, and an air conditioning system will be described below by way of example. However, it should be understood that all descriptions are given for illustrative purposes only, and thus should not be understood as any limitation on the scope of the invention, which is defined by the claims.

In addition, for any single technical feature described or implicit in some embodiments mentioned herein, or any single technical feature illustrated or implicit in the drawings, this application still allows any combination or deletion between these technical features (or equivalents thereof) without any technical obstacles, thereby obtaining more other embodiments of the invention that may not be directly mentioned herein.

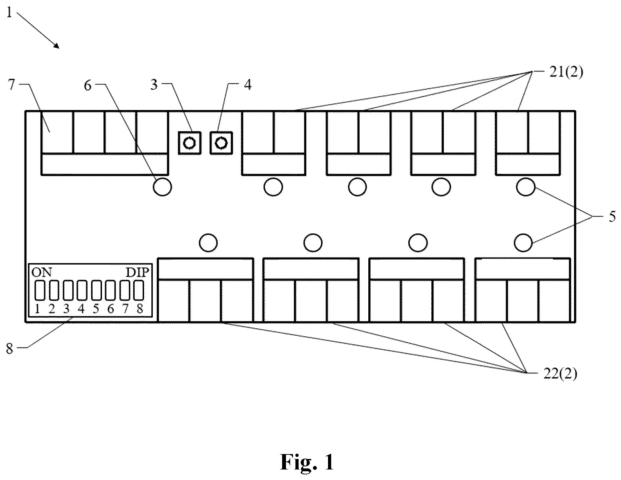

Fig. 1 is a schematic diagram of an input/output module.

As illustrated in Fig. 1, an input/output module 1 is provided, which is generally applied to a fire alarm system and serves as a medium for signal reception and transmission, and the input/output module 1 includes a plurality of ports 2, a self-test mode activation unit 3, a port switching unit 4 and a plurality of port indicator lights 5.

In some embodiments of this application, the plurality of ports 2 include four input ports 21 and four output ports 22. The input ports 21 each are configured to receive a signal input, and the input ports 21 each include an open/short state, an active state, and a standby state when operating normally. When a certain input port 21 is detected, the input port 21 may be set to a simulated active state, and when the input/output module 1 polls the input port 21, the input port 21 transmits the simulated active state, which indicates that an input function of the input port 21 can operate normally.

The input port 21 may be connected to an external detection device such as a temperature sensor and a smoke detector, and receive a detection signal from the detection device to collect fire information, or may be connected to an external control device such as a control panel, and receive a control signal transmitted by the control device.

In some embodiments of this application, the output port 22 is configured to output a signal to the outside, and the output port 22 is typically configured as a normally open/normally closed contact to transmit a control signal to the external device while switching between a normally open state and a normally closed state. Alternatively, the output port 22 is configured as an active output port with adjustable output parameters, which is not limited herein. When a certain output port 22 is detected, an output of a relay can be changed (normally open/normally closed), and it is observed whether the external device connected to the output port 22 performs a corresponding action, thereby determining whether an output function of the output port 22 can operate normally.

Optionally, in some embodiments of this application, the four output ports 22 in the input/output module 1 are communicatively connected to a plurality of first external modules (not illustrated), respectively. The first external modules may be separately connected to an external fire alarm device such as a smoke prevention valve, an air supply valve, a fire shutter, a fan, and an alarm bell, and transmit a control signal to the fire alarm device to control the fire alarm device in the fire alarm system to perform actions such as alarm triggering and fire suppression.

In some embodiments, taking the first external module as an alarm bell as an example, in a working mode, the output port 22 connected thereto is in a normally open state, and the alarm bell does not work. When an abnormal condition such as fire or smoke is detected, an output signal of the output port 22 changes, and the output port becomes closed and conductive, so that the alarm bell transmits an alarm signal. In a self-test mode, by changing an output signal of the relay, the output port 22 changes from a normally open state to a closed conductive state, so that an operator can determine whether the output port 22 is abnormal according to whether the alarm bell connected to the output port 22 transmits an alarm signal.

The input/output module 1 usually includes two operation modes: a working mode and a self-test mode. In the working mode, the input/output module 1 performs signal input and output in the fire alarm system through respective input ports 21 and respective output ports 22. In the self-test mode, the input/output module 1 can test an input/output function of each port 2 to ensure that the input/output module 1 can operate stably when entering the working mode.

In some embodiments of this application, the self-test mode activation unit 3 is configured to activate the input/output module 1 to enter the self-test mode, and a normal state of the input/output module 1 is the working mode. After the input/output module 1 is installed in the fire alarm system, the operator may enable the input/output module 1 to enter the self-test mode through the self-test mode activation unit 3, perform self-tests on a plurality of ports 2 therein, and determine whether the ports 2 are successfully connected and whether input/output functions of the ports 2 can be effectively implemented. In addition, after the self-test action on the ports 2 is completed, the self-test mode activation unit 3 may enable the input/output module 1 to exit the self-test mode and enter the working mode for signal input/output transmission.

Optionally, in some embodiments, the self-test mode activation unit 3 is configured as a first button switch, and the operator activates the input/output module 1 to enter the self-test mode by a long press of the first button switch for a specified time. Similarly, the input/output module 1 is controlled to exit the self-test mode by the long press of the first button switch again for a specified time. After a certain port 2 is selected, the first button switch is clicked to transmit a self-test instruction to the port 2, thereby controlling the port 2 to perform a self-test.

In some embodiments of this application, when the input/output module 1 is in the self-test mode, the port switching unit 4 may switch and select the port 2 currently being detected. The port switching unit 4 selects respective ports 2 one by one to implement self-tests on all the ports 2 of the input/output module 1.

Optionally, in some embodiments, the port switching unit 4 is configured as a second button switch. After the input/output module 1 enters the self-test mode, the second button switch is pressed, and the port switching unit 4 automatically selects a certain port 2. If the port 2 is a target detection port, the first button switch is pressed, a self-test instruction is transmitted to the port 2, and the port 2 is controlled to perform a self-test. If the port 2 is not the target detection port, the second button switch is pressed to cause the port switching unit 4 to select the next port 2, and the port switching unit 4 can cycle sequentially among the eight ports 2, so that any port 2 can be selected to perform a self-test by pressing the second button switch multiple times.

In some embodiments, the first button switch and the second button switch are both independent button modules on a single-chip microcomputer, the independent button modules conduct when pressed and disconnect when released, and a long press operation and a short press operation can be determined by the conduction time of the independent button modules. The independent key modules are easy to operate, have a simple structure, occupy a small physical space on a circuit board of the input/output module 1 while consuming low computational resources, and have high control efficiency and low cost.

It is worth mentioning that in other embodiments of this application, the self-test mode activation unit 3 and the port switching unit 4 may also be implemented by a toggle switch, a button switch, a relay switch, or the like, which is not limited herein.

Optionally, in some embodiments of this application, the input/output module 1 further includes the port indicator light 5 and a mode indicator light 6. The eight port indicator lights 5 are respectively disposed corresponding to the four input ports 21 and the four output ports 22, and display selected states and detection results of the corresponding ports 2.

For example, the port indicator light 5 reflects different states of the corresponding port 2 through different illumination states such as blinking, steady on, and steady off. For example, steady off indicates an unselected state, blinking indicates a selected state, and steady on indicates an in-test/in-work state. Alternatively, the port indicator light 5 reflects different detection results of the corresponding port 2 through different illumination colors. For example, green is a normal test state, red is an activated state, and yellow is an abnormal state, which is not limited herein.

In some embodiments of this application, the mode indicator light 6 is disposed corresponding to the self-test mode activation unit 3, and displays an operation mode of the input/output module 1. After the self-test mode activation unit 3 activates the input/output module 1 to enter the self-test mode, the mode indicator light 6 starts to light up or blink, and remains illuminated or blinking throughout a self-test process. After the self-test mode activation unit 3 controls the input/output module 1 to exit the self-test mode, the mode indicator light 6 turns off. The mode indicator light 6 can accurately display a current operation mode of the input/output module 1, so that the operator can accurately control the input/output module 1 in the working mode/self-test mode.

In some embodiments, the port indicator light 5 and the mode indicator light 6 are set as LED light-emitting units, and the modes and states of the input/output module 1 and the port 2 thereof are displayed through changes in the illumination states and illumination colors of the LED light-emitting units, which is clear and efficient and low in cost.

It is worth mentioning that, in other embodiments of this application, the port indicator light 5 and the mode indicator light 6 may be provided with other types of display modules such as LED and an OLED screen as long as the display modules can intuitively reflect the modes and states of the input/output module 1 and the port 2 thereof, which is not limited herein.

Optionally, in some embodiments of this application, the input/output module 1 further includes a bus port 7 that is communicatively connected to a second external module (not illustrated). The second external module may be a control unit in the fire alarm system such as an external fire control panel, and the input/output module 1 is connected to and communicates with the external control unit through the bus port 7.

Optionally, in some embodiments of this application, the input/output module 1 further includes a DIP switch 8 for setting a communication address and controlling an input/output state of the input/output module 1. In some embodiments, the DIP switch 8 is configured as an 8-bit binary DIP switch.

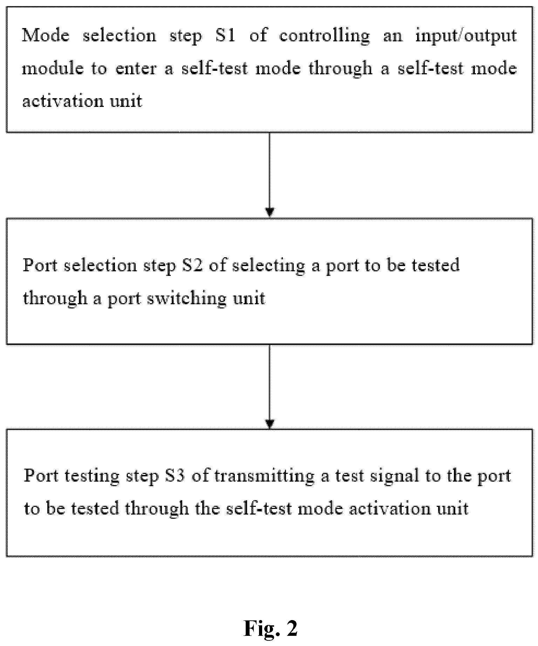

Fig. 2 is a schematic flowchart of a self-test method for the input/output module.

As illustrated in Fig. 2, a self-test method for an input/output module is provided, which is applied to the input/output module to test respective input ports and respective output ports in the input/output module. The self-test method for the input/output module includes: a mode selection step S1 of controlling the input/output module to enter the self-test mode through the self-test mode activation unit; a port selection step S2 of selecting a port to be tested through the port switching unit; and a port testing step S3 of transmitting a test signal to the port to be tested through the self-test mode activation unit.

In some embodiments of this application, after completing connection and installation of the input/output module, the operator may directly perform self-tests on respective ports by the self-test method to determine whether the respective ports can operate normally. The self-test method does not need to use an external module such as a fire control panel to perform port detection, which can effectively improve detection efficiency and save time and labor costs.

Optionally, in some embodiments of this application, in the mode selection step S1, the self-test mode is entered/exited by a long press of the first button switch, a self-test signal can be transmitted to the currently selected port for a self-test by short press of the first button switch, and the entering/exiting of the self-test mode and a detection command for a certain port can be implemented by the same button switch.

Optionally, in some embodiments of this application, in the port selection step S2, when the second button switch is pressed to select a certain port, a port indicator light corresponding to the port lights up.

In some embodiments, after entering the self-test mode, when the second button switch is pressed, a first port indicator light corresponding to a first port in the input/output module lights up or blinks to indicate that the first port is in the selected state. If a target detection port that the operator intends to detect is the first port, the short press of the first button switch is performed to test the selected first port. If the target detection port that the operator intends to detect is not the first port, the second button switch is pressed to select a second port, and a second port indicator light corresponding to the second port lights up or blinks. The second button switch is pressed again to select a third port, and a third port indicator light corresponding to the third port lights up or blinks. By analogy, the operator may select any one of the plurality of ports by pressing the second button switch multiple times, and in conjunction with the port indicator light, the operator can conveniently and intuitively observe whether the currently selected port is the target detection port, which is convenient for the operator to perform a test operation.

Optionally, in some embodiments of this application, the self-test method further includes: an input port testing step S31 of adjusting a certain input port to a simulated active state and transmitting the simulated active state when the input/output module polls the input port; and a test result displaying step S4 of determining a state of the input port according to the port indicator light and/or the second external module corresponding to the input port.

In some embodiments, before the self-test is performed on the ports of the input/output module, the input/output module needs to be installed in the fire alarm system, each port is connected to a corresponding external module or device, the bus port is connected to the control panel, and the DIP switch sets the communication address of the input/output module and controls the input/output state of the input/output module.

Specifically, an input port test is performed as follows:
in the mode selection step S1, the first button switch is pressed and held for 3 seconds or more until the mode indicator light blinks red, all the port indicator lights stably display current states of corresponding ports thereof (for example, green is the normal test state, red is the activated state, yellow is the abnormal state, and the like), and then the first button switch is released; and
in the port selection step S2, the second button switch is pressed, and the first port indicator light corresponding to the first port blinks green, indicating that the first port has been selected and is waiting for testing. If the first port is to be tested, the process proceeds to the port testing step S3, the first button switch is pressed to perform a test, and if other ports are to be switched, the second button switch continues to be pressed until the target detection port is selected.

In the port testing step S3, the first button switch is pressed to transmit a self-test instruction to the selected port.

In the input port testing step S31, the input port is set to an active state and maintains the active state for a certain period of time (30 s), the port indicator light corresponding to the input port turns to a color corresponding to the active state (such as red), and the input port transmits the simulated active state when the input/output module polls the input port.

In the test result displaying step S4, the operator can determine whether the input function of the input port is normal according to the port indicator light corresponding to the input port (whether the port indicator light turns red) and/or whether the second external module (that is, the control panel) corresponding to the input port receives the simulated active state. If the corresponding port indicator light turns red and the second external module receives the simulated active state, it is determined that the input function of the input port is normal, and otherwise, it is determined that the input function of the input port is abnormal.

It is worth mentioning that, for the input port, the simulated active state is extended for 30 seconds in the self-test mode, and when the input/output module polls the input port, a new state is transmitted according to whether the 30 seconds have timed out.

When the input/output module is in the self-test mode, the mode indicator light remains illuminated/blinking red at all times. Finally, the step of exiting the self-test mode is as follows: when the last port is selected, a port indicator light corresponding to the last port blinks yellow, indicating that the last port has been tested currently and the first button switch is briefly pressed once to exit the self-test mode. In the self-test process, if the self-test mode needs to be exited, the first button switch is pressed and held for 3 seconds or more until the mode indicator light is turned off, and thus the self-test mode can be exited. Alternatively, the test action is directly stopped for 5 minutes, and then the input/output module automatically exits the self-test mode.

Optionally, in some embodiments of this application, the self-test method further includes: an output port testing step S32 of transmitting an adjustment signal to the output port to switch an output state of the output port; and the test result displaying step S4 of determining a state of the output port according to the port indicator light and/or the first external module corresponding to the output port.

Specifically, an output port test is performed as follows:
after the mode selection step S1 and the port selection step S2 are completed, the port testing step S3 of pressing the first button switch to transmit a self-test instruction to the selected port is performed; and
in the output port testing step S32, the output state of the output port is changed, and if the relay is in a normally closed state, the relay is opened, and if the relay is in a normally open state, the relay is closed.

It is worth mentioning that in the self-test mode, when one output port is selected and then the first button switch is clicked repeatedly, an output signal of the output port is switched repeatedly.

In the test result displaying step S4, different output states (open/closed) of the output port correspond to different colors (red/green) of the port indicator light, and the operator can determine whether the output function of the output port is normal according to the port indicator light corresponding to the output port (whether a color thereof changes) and/or whether the first external module (such as an alarm bell) corresponding to the output port receives the output signal and performs a corresponding action. If the color of the corresponding port indicator light changes and the first external module (such as an alarm bell) receives the output signal and performs a corresponding action (such as sounding an alarm), it is determined that the output function of the output port is normal, and otherwise, it is determined that the output function of the output port is abnormal. Further, if the color of the corresponding port indicator light changes and the first external module (such as an alarm bell) does not perform a corresponding action, it may be preliminarily determined that the output function of the output port is normal and a connection relationship between the output port and the first external module (such as the alarm bell) is abnormal.

The above description uses the self-test method for the input/output module applied to the fire alarm system as an example for explanation. Those skilled in the art appreciate that the input/output module may be further applied to other systems or devices to perform signal input/output, and details thereof are not described herein again.

One or more embodiments of the invention have been described with reference to the accompanying drawings. However, the protection scope of the invention is not limited to these specific embodiments. Those skilled in the art can make equivalent changes or substitutions to related technical features without departing from the scope of the invention, which is defined by the claims.

## Claims

1. An input/output module (1) comprising:
a plurality of ports (2) including input ports (21) and output ports (22);
a self-test mode activation unit (3) configured to activate the input/output module to enter a self-test mode;
a port switching unit (4) configured to switch and select a port (2) currently being tested in the self-test mode; and
a plurality of port indicator lights (5) disposed corresponding to the plurality of ports (2) respectively and configured to display selected states and detection results of the corresponding ports (2).

2. The input/output module (1) according to claim 1, wherein each of the output ports (22) is communicatively connected to a first external module.

3. The input/output module (1) according to claim 1 or 2, further comprising:
a bus port (7) communicatively connected to a second external module.

4. The input/output module (1) according to claim 1, 2 or 3, further comprising:
a mode indicator light (6) disposed corresponding to the self-test mode activation unit (3) and configured to display an operation mode of the input/output module (1).

5. The input/output module (1) according to any preceding claim, wherein the self-test mode activation unit (3) and the port switching unit (4) are respectively configured as a first button switch and a second button switch.

6. A self-test method for an input/output module (1), the self-test method being applied to the input/output module (1) according to any preceding claim, the self-test method comprising:
a mode selection step of controlling the input/output module (1) to enter the self-test mode through the self-test mode activation unit (3);
a port selection step of selecting a port (2) to be tested through the port switching unit (4); and
a port testing step of transmitting a test signal to the port (2) to be tested through the self-test mode activation unit (3).

7. The self-test method for an input/output module (1) according to claim 6, when dependent on claim 5, wherein in the mode selection step, the self-test mode is entered/exited by a long press of the first button switch.

8. The self-test method for an input/output module (1) according to claim 6 or 7, when dependent on claim 5, wherein in the port selection step, when the second button switch is pressed to select a certain port (2), a port indicator light (5) corresponding to the port (2) lights up.

9. The self-test method for an input/output module (1) according to claim 6, 7 or 8, further comprising:
an input port testing step of adjusting a certain input port (21) to a simulated active state and transmitting the simulated active state when the input/output module (1) polls the input port (21); and
a test result displaying step of determining a state of the input port (21) according to the port indicator light (5) and/or the second external module corresponding to the input port (21).

10. The self-test method for an input/output module (1) according to claim 6, 7, 8 or 9, further comprising:
an output port testing step of transmitting an adjustment signal to the output port (22) to switch an output state of the output port (22); and
a test result displaying step of determining a state of the output port (22) according to the port indicator light (5) and/or the first external module corresponding to the output port (22).
